Europäisches Patentamt

European Patent Office

Office européen des brevets

(19)

(11) Publication number: 0 300 096
A1

# (12) EUROPEAN PATENT APPLICATION

(21) Application number: 87201376.8

(22) Date of filing: 20.07.87

(51) Int. Cl.4: H04N 1/36

(43) Date of publication of application:
25.01.89 Bulletin 89/04

(84) Designated Contracting States:
AT BE CH DE ES FR GB GR IT LI LU NL SE

(71) Applicant: AGFA-GEVAERT naamloze
vennootschap
Septestraat 27
B-2510 Mortsel(BE)

(72) Inventor: Boeve, Gerard Jozef
Timmerdonckstraat 45
B-2520 Edegem(BE)
Inventor: Trouillard, Frank Charlotte
Boekenberglei 181 Bus 4
B-2100 Deurne(BE)

(54) Electrophotographic printer with lateral image alignment.

(57) An electrophotographic printer with an electronic line-imager (41) for line-wise exposing an image on an electrostatically charged drum (40), wherein the effective length $l$ of the line-imager is greater than the length $i$ of a line image to be produced thereby, and wherein sensor means (88) is provided for sensing the lateral position of a sheet (61) as such sheet approaches towards the drum, and control means for controlling the line-imager in response to the output signal of the sensor means, for altering the longitudinal position of the line images in the line-imager, thereby to compensate for deviations of a sheet from its correct lateral position.

Fig. 2

EP 0 300 096 A1

## ELECTROPHOTOGRAPHIC PRINTER WITH LATERAL IMAGE ALIGNMENT

The present invention relates to an electrophotographic printer with a line-imager, in which means is provided for obtaining a correct lateral position of the electrophotographic image onto a sheet of paper onto which the image is transferred from a photoconductor drum.

The correct position of a sheet that is forwarded to an imaging station in an electrophotographic printer is important since usually the locus where the image is produced in such station is fixed so that it will depend on the actual position of a sheet at such locus whether the image will take a correct position on the sheet, or not. Possible causes for an uncorrect position of an image on the sheet are : a longitudinal, a transversal and an angular misalignment of the sheet. The present invention deals with the control of the transverse position of an image on a sheet fed to an imaging station.

In conventional printing apparatus, paper sheets are taken from a stack of sheets by mechanisms comprising sucker cups and guide arms that ensure a reproducable position of a sheet at the imaging station where an image is printed by an inked printing cylinder on the sheet.

In known electrophotographic copying apparatus, paper sheets are usually pulled by friction fingers from a stack of sheets and fed by a first roller pair towards a second roller pair that is at standstill as the sheet arrives. The distance between both roller pairs is smaller than the length of the sheet so that the sheet will buckle as its leading edge abuts in the nip of the second roller pair. The sheet buckling causes a biasing force that urges the leading edge of the sheet in firm contact with the nip of the second roller pair. This contact ensures an alignment of the leading edge of the sheet with the roller pair, also in case the sheet had a skewed position as it approached towards said roller pair.

When the time for imaging has come, the rotation of the second roller pair is started whereby the sheet is fed in a correct angular position into the imaging station. However, the angular alignment of the sheet produces a lateral displacement of the sheet from its formerly correct position, so that the image that is transferred onto the sheet in the imaging station will take a position on the sheet that is laterally displaced as compared with the image on a sheet that did not undergo an angular correction.

In known electrophotographic printers, such as laser or LED printers, the sheet feeding mechanisms are largely based on techniques used in electrophotographic copiers, and thus it will be understood that the precision of image positioning on the sheet is often not on the level of the quality of the image production itself.

It is the object of the present invention to provide an electrophotographic printer with means for co-ordinating the lateral position of the image in the imaging station with the lateral position of an angularly aligned sheet. The invention is particularly concerned with so-called E.P.P. apparatus, i.e. electronic printing and publishing apparatus.

According to the present invention, an electrophotographic printer, comprising a rotatable semiconductor drum, means for electrostatically charging the drum, an electronic line-imager for line-wise exposing an image on the rotating electrostatically charged drum, a developer station for toner-developing the electrostatic image on the drum, sheet feeding means for advancing a paper sheet in contact with the drum, means for causing transfer of the toner image from the drum onto the paper sheet as the sheet moves progressively in contact with the drum, and means for fixing the transferred toner image onto the paper sheet, is characterised thereby that the effective length $l$ of the line imager is greater than the length $i$ of a line image to be produced thereby, and that said printer comprises sensor means for sensing the lateral position of a sheet as such sheet approaches to the drum, and control means for controlling the line-imager in response to the output signal of the sensor means, for altering the longitudinal position of the line images in the line imager, thereby to compensate for deviations of a sheet from its correct lateral position.

The term "printer" as used in the present specification does not only envisage LED or laser printers that produce an image starting from information from a work station, but it also covers so-called laser copiers which have advanced editing features as compared with conventional copiers.

The term "line imager" stands for an elongate exposure head that comprises a multiplicity of individually energizable sources of radiation, disposed on one line, or on several parallel lines in staggered relationship in view of a higher image resolution, but said term applies also to a laser beam that is swept over the semi-conductor drum and that is dotwise modulated to produce in this way the discrete image points.

According to a preferred embodiment of the invention, the sensor means for sensing the lateral position of the sheet is located downstream of an arrangement for the correct angular alignment of the sheet, and the sensor means is arranged to measure the position of one lateral edge of a sheet.

The sensor means may comprise a linear CCD device that is mounted at one side of the sheet path in a direction normal to the transport direction of the sheet, and a corresponding elongate radiation source at the opposite side of the sheet path.

However, the sensor means may also comprise a linear LED array that is mounted at one side of the sheet path in a direction normal to the transport direction of the sheet, means for energizing the distinct LED's of said array in sequence, and detection means at the opposite side of the sheet path with one sensor and with a light collector for collecting the radiation of the distinct LED's onto said sensor.

The invention will be described hereinafter by way of example with reference to the accompanying drawings in which :

Fig. 1a is the right-hand part of a diagrammatic longitudinal sectional view of one embodiment of an electrophotographic printer according to the invention, whereas

Fig. 1b is the left-hand part of this view,

Fig. 2 is a partial diagrammatic plan view of the printer of Figs. 1a and 1b,

Fig. 3 is a diagrammatic isometric view of the exposure station of the printer, and

Fig. 4 illustrates the electronic block circuit for the control of the exposure station.

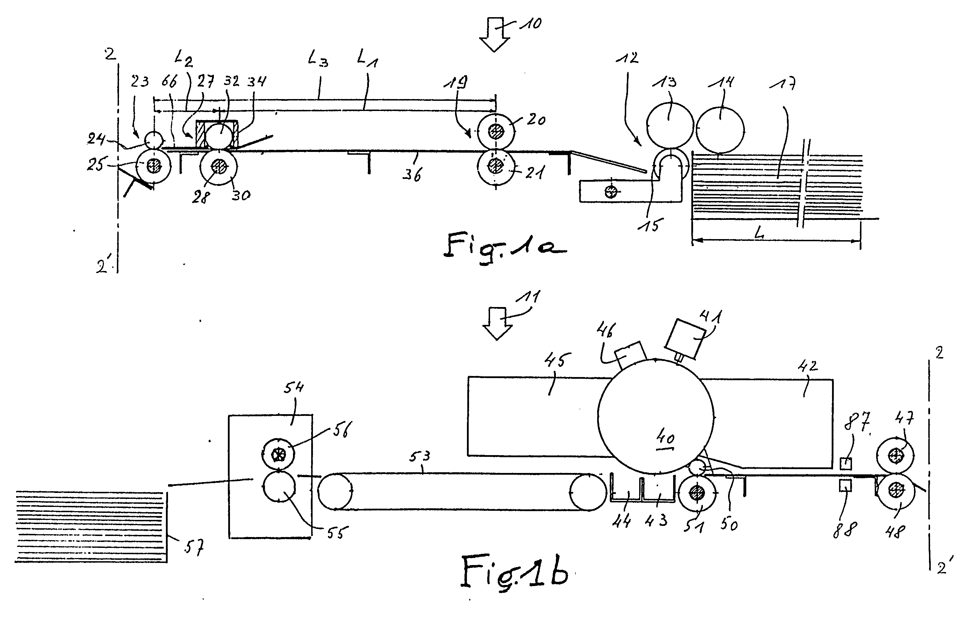

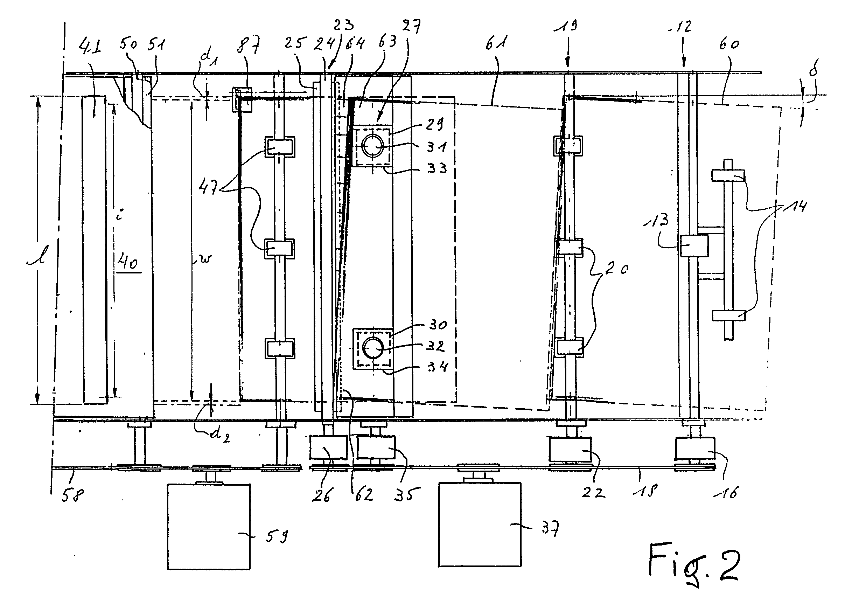

Referring to Figs. 1a, 1b and 2, a LED printer is illustrated for the production of images on plain paper sheets. Fig. 1a shows the right-hand part of the view of the printer, and Fig. 1b shows the left-hand part of this view. Both parts should in fact be to each other at the lines 2-2'. A portion of the left-hand part of the printer has been omitted in the plan view of Fig. 2.

The printer comprises basically a paper feeding section and an imaging section, as indicated by the arrows 10 and 11 respectively. Both sections have separate driving means.

The paper feeding section 10 comprises the following elements.

A dispenser mechanism 12 with driven rollers 13, 14 and a non-driven pressure roller 15, for taking sheets one by one from a stack of sheets 17. The stack of sheets is provided with means known in the art for keeping the top of the stack within the reach of the rollers 14. The roller 13 takes a bodily stationary position whereas the rollers 14 are bodily pivotable about the axis of the roller 13 and are rotatable coupled with the roller 13 via a belt drive, not illustrated. The roller 13 is driven via an electromagnetic clutch 16 and a corresponding chain wheel by an endless chain 18.

Further, a first roller pair 19 with upper and lower roller sections 20, 21. The shaft of the roller sections 21 is driven by the chain 18, via a clutch 22. The roller sections are covered with a resilient material for instance a rubber, and the upper sections are driven by contact with the lower ones.

Still further, a second roller pair 23 with an upper and a lower roller 24, resp. 25. The roller 25 is driven via a magnetic clutch 26 and a corresponding chain wheel by the chain 18. The bearings of the roller 24 are vertically displaceable, and are spring-biased (not illustrated) towards the roller 25 so that both rollers are in contact with each other in the absence of a sheet.

Finally, the apparatus comprises additional drive means 27 constituted by a shaft 28 with two laterally spaced roller sections 29 and 30, and cooperating balls 31, 32 that are journalled in stationary housings 33, 34 having a vertical cylindrical bore to permit free vertical displacements of the balls. The diameter of the bore exceeds the diameter of the balls by a few tenths of a millimeter. The roller sections 29 and 30 have a resilient covering, and the shaft 28 is driven by the chain 18 via an electromagnetic clutch 35.

The distances $L_1$ between the drive means 27 and the first roller pair 19, and $L_2$ between the roller pair 23 and the drive means 27, are smaller than the length L of a sheet to be fed, whereas the distance $L_3$ between the second roller pair 23 and the first roller pair 19 may be smaller or greater than the length of such sheet.

A plate 36 serves for supporting a sheet during its travel through the paper feeding section 10, and a plate 66 near the end of the plate 36 determines a narrow passage for the sheet.

The driving of the different rollers, resp. roller sections, occurs by a motor 37 that is rotationally coupled with the chain 18 mentioned already, and that rotates uninterruptedly during the operation of the apparatus. The different electromagnetic clutches are energized in timed relationship to obtain the desired paper feeding sequence. The energizing of the different clutches occurs under microprocessor control, in response to sensors that detect the position of the leading end of a sheet near the imaging section, to paper jam sensors, etc.

The imaging section 11 of the printer comprises the following elements.

A rotatable photoconductor drum 40. An exposure station 41 for line-wise exposing the drum in accordance with the image that must be exposed. In the present embodiment, the exposure station 41 comprises a LED-bar with a plurality of LED-arrays mounted in closely adjacent relationship, whereby two staggered rows of LED's are formed that each comprise also their related driving, buffer, shifting and resetting circuitry.

A developing station 42 for the application of a developing toner to the rotating drum.

A toner transfer station 43 with a corona wire for causing the transfer of the developed toner image from the drum onto a sheet of paper that is fed in contact therewith, and a paper release station 44 with a corona wire for causing the sheet of paper to release from the drum surface onto which it might adhere.

A cleaning station 45 for cleaning the drum from which the developed image has been removed.

And finally, a charging station 46 for uniformly electrostatically charging the drum prior to the next image-wise exposure.

The drive means of the imaging section comprises the following elements.

A pair of input roller sections 47, 48, for taking-over the sheet transport from the feeding section 10, and a pair of rollers 50, 51 for directing the sheet in contact with the drum 40.

Further, vacuum-belt means 53 for carrying the sheet with the fresh toner image away from the drum, and finally a fixing station 54 with a lower roller 55 and an upper roller 56 which is internally heated by an IR-heater. The fixed sheet is received in a tray 57. The driving of the different rotatable members of the imaging section occurs by a timing belt 58 driven by an electric motor 59. The drum 40 is directly coupled with the belt 58, and rotates continuously during the operation of the apparatus.

Further particularities of the described sheet transport system may be found in our co-pending application filed on even date herewith and entitled : "An electrophotographic printer with angular sheet alignment".

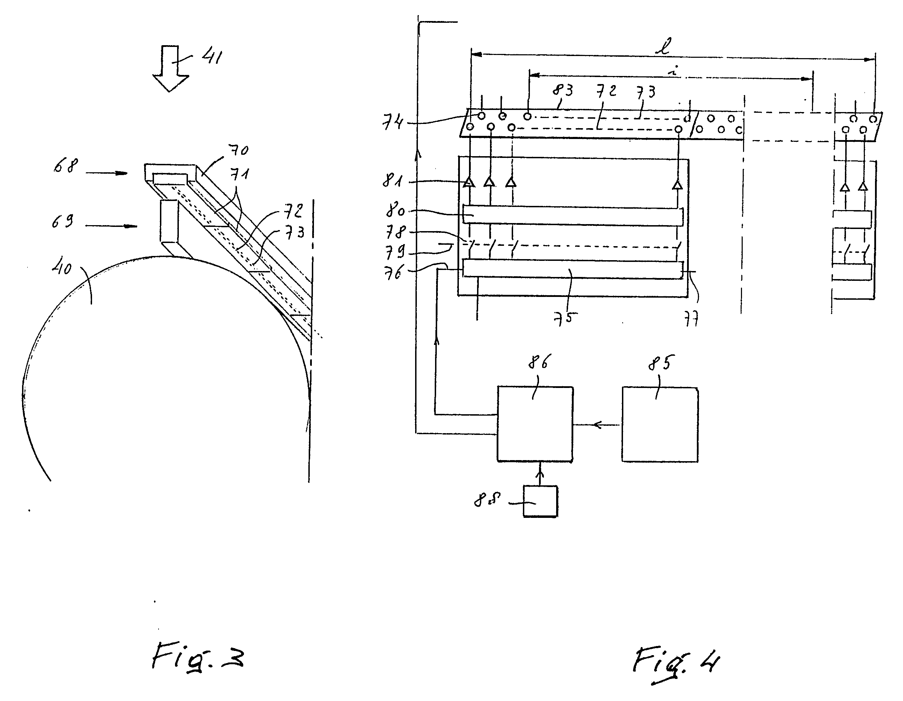

The exposure station 41 is illustrated diagrammatically in Fig. 3. The station comprises an exposure head 68 with optical transfer means 69. The exposure head comprises an elongate channel section bar 70 wherein a plurality of exposure modules 71 are mounted next to each other. Each module comprises a plurality of LED emitters arranged in two parallel rows 72, 73 that run parallel with the axis of the drum. The optical transfer means 69 is an elongate element wherein a plurality of self-focussing fibers are provided.

A diagrammatic view of the control circuits of one row (72) of emitters of one module is shown in Fig. 4. The control circuits of the opposite, staggered row (73) of emitters are identical to the first row of emitters and are therefore not illustrated in the drawing.

Numeral 75 is a shift register with an input terminal 76 and an output terminal 77. Switches 78 are load switches that are simultaneously controllable by a line 79, 80 is a latch register, and 81 are individual drivers for each LED 74. The outputs of the drivers are connected to the corresponding LED's. All the described elements are integrated in a monolithic silicon chip, and each module comprises suchlike chip and a corresponding array 83 of LED's. The output 77 of the shift register 75 is connected to the input of the shift register of the next module, etc., whereas the line 79 should be considered as controlling all the load switches of the control chip of all the modules.

The effective length of the recording head is indicated by "l". The geometric length of the head as such may be greater, but "l" is the distance between the two outermost LED's of the head. Further particularities of the described recording head may be found in EU Patent 0086907 entitled : "Recording apparatus", filed on 25 october 1982 by Agfa-Gevaert N.V. These particularities are not required for understanding the mechanism of the present invention.

The circuits for the control of the information flow to the recording head comprise a recording signal or character signal generator 85, and a controller 86 with selector means for applying the recording signal alternatively to the row of even and of odd LED's, memory circuits, a clock frequency generator, setting and re-setting circuits, synchronization circuits, etc. All these circuits are known in the art and a description thereof is not required for the understanding of the operation of the apparatus.

The controller 86 is commanded by a sensor 88 in such a way that a line of information with a length $i$ may be longitudinally shifted.

In accordance with the principle of the invention, the effective length $l$ of the exposure head is greater than the length $i$ of a line of information. The position of a line of information may be shifted within the limits of the exposure head, one extreme position of a line of information coinciding with the most lefthand LED of the LED arrays of Fig. 4, and the opposite extreme position of a line of information coinciding with the most righthand LED of the LED arrays.

The sensor 88 is operative to command the controller 86 in such a way that a normal line signal from the character generator 85 is preceeded and followed by a number of "blank" signals whereby the centre of such line of information will coincide with the centre of the exposure head.

In the case of a laterally displaced sheet, the number of "blank" signals will be altered so that the line image will undergo a longitudinal displacement thereby to coincide with the deviating sheet position.

The sensor 88 is illustrated diagrammatically in Figs. 1b and 2, and co-operates with a source of radiation 87 to detect the position of one lateral edge of a sheet after the sheet has been angularly aligned. In one suitable form, the radiator 87 may comprise an elongate incandescence radiator, with a corresponding optic for producing a line of light with a length of approximately 10 mm that is partially intercepted by a margin of the sheet, and the sensor 88 may be in the form of a photosensitive CCD (charge-coupled device) chip with a plurality of line-wise arranged individual photosensors that enable the lateral position of the sheet edge to be very accurately read-out. The radiator 87 may be provided with filter means to produce actinic radiation.

The operation of the described electrophotographic printer is as follows for a sheet the length of which is smaller than $L_3$.

The apparatus being warmed up and the driving motors running, the clutches 16, 22 and 35 are energised in response to the signal from the imaging station that a print is to be made.

The rollers 13 and 14 take the upper sheet from the stack 17 of sheets and feed it towards the first roller pair 19. The removed sheet has taken a skewed position, for a reason that is unimportant in the present description, and this position is indicated by the rectangle 60 in broken lines and the skew angle Delta in Fig. 2.

The sheet becomes engaged by the roller pair 19 and this roller pair takes over the sheet drive as the trailing edge of the sheet left the roller pair 12. During the further transport of the sheet the skew position of the latter may remain unaltered or may increase, depending on the precision of the different elements that have an influence on the sheet transport.

The length L of the sheet is greater than the distance $L_1$, so that the leading end of the sheet becomes engaged by the sheet drive 27 before the trailing end of the sheet becomes disengaged from the roller pair 19.

The transport of the sheet continues until the leading sheet corner enters the nip between the rollers 24, 25 of the roller pair 23. This situation is illustrated in Fig. 2, where the rectangle 61 drawn in broken lines shows the skewed sheet, and 62 is the leading sheet corner that makes the first contact with the roller pair 23. At the moment the described contact occurs, the contact between the trailing sheet end and the roller pair 19 may have been broken. However, in the meantime, the sheet drive has been taken over by the drive means 27 since the bias of the balls 31, 32 on the sheet is sufficiently great to produce a sufficient friction between the sheet and the roller sections 29, 30 for said roller sections to take over the sheet drive after the sheet drive by the roller pair 19 was stopped.

However, the bias of the balls 31, 32 is also sufficiently small to permit the roller sections 29, 30 to slip on the sheet surface as the sheet is unable to advance any further. This situation occurs as the sheet abutted against the stopped roller pair 23. While the sheet corner 62 is unable to further advance, the remainder of the leading edge of the sheet remains remote from the roller pair 23 over a distance that increases from zero (at the corner 62) to a maximum at the opposite, trailing sheet corner 63. This separation has been illustrated by the wedgelike opening 64 in Fig. 2. The sheet drive continues at the side of the corner 63, so that the sheet will start to rotate in its own plane about the corner 62 until finally the leading edge of the sheet abuts in precise parallel relationship against the rollers 24, 25. At this moment, a correct angular sheet position has been obtained since the rollers 24, 25 are accurately aligned in parallel with the semiconductor drum 40.

The roller sections 29, 30 continue to rotate, and a 100 %'s slip occurs between said roller sections and the arrested sheet. During said continued driving force, and also during the adjustment of the angular sheet position, the leading sheet portion that is involved in the driving forces is kept well straight by a sheet guidance formed by the closely spaced guide plates 36 and 66.

A short while, usually less than 1 second after the sheet abutted against the roller pair 23, the clutche 26, is energized whereby the sheet drive is resumed. The now rotating rollers 24, 25 pull the sheet from the sheet feeding section 10 and introduce it into the imaging section 11 where the rollers 47, 48 and 50, 51 take over the sheet drive.

Immediately behind the rollers 47, 48, the lateral position of the sheet is sensed by the sensor 88. The distance $w$ in Fig. 2 indicates the width of the sheet, and $d_1$ and $d_2$ are the maximum lateral deviations of the sheet position that are expected as a consequence of the angular alignment of a sheet that takes a skewed position. The distance $i$ represents the length of an information line on the sheet. The signal of the sensor 88 makes the controller 86 to adjust the longitudinal position of the lines of information in the exposure head.

Means, known in the art, is provided for correlating the initiation of the linewise exposure in the station 41 with the arrival of the sheet at a given position, so that the toner image transferred from the drum 40 will take a correct longitudinal position on the sheet as this is moved in contact with the drum. The correct lateral position of the image is obtained as described hereinbefore.

The sheet bearing the transferred toner image is received on a vacuum conveyer belt 53, and then fed through a station 54 where the image is heat-fixed. Finally the sheet is received in a collector tray 57.

The following data illustrate the described printer.

Sheets : A4 (L = 210 x 297 mm) and A3 (L = 297 x 420 mm) format.

$L_1$ : 190 mm

$L_2$ : 235 mm

$L_3$ : 45 mm

Angular sheet deviations, measured after the pair of rollers 24, 25 : always less than 3 arc minutes.

w : 297 mm

$d_1$, $d_2$ : 1,5 mm

i : 297 mm

l : 300 mm

exposure head 41 : LED's 4864

sensor 88 : CCD chip with 1728 photosensors covering a length of 13.8 mm.

radiator 87 : tungsten-halogen lamp

The invention is not limited to the described embodiment of an electrophotographic printer.

The printer may as well operate with a laser exposure station, instead of LED means.

The sensor means for measuring the lateral position of a sheet may also comprise a linear LED array that is mounted at one side of the sheet path in a direction normal to the transport direction of the sheet, means for repeatedly energizing the distinct LED's of said array in sequence, and detection means at the opposite side of the sheet path with one sensor, e.g. an amorphous silicon detector, and with a light collector for collecting the radiation of the distinct LED's onto said sensor. In the operation of the circuit, the LED's are energized from one side of the sheet path towards the opposite side, and the sensor will receive light until the radiation becomes intercepted by the lateral sheet edge. The last LED that was effective to still radiate the sensor is representative for the lateral position of the sheet.

## Claims

1. An electrophotographic printer, comprising a rotatable semiconductor drum (40), means (46) for electrostatically charging the drum, an electronic line-imager (41) for line-wise exposing an image on the electrostatically charged drum, a developer station (42) for toner-developing the electrostatic image on the drum, sheet feeding means (50, 51) for advancing a paper sheet in contact with the drum, means (43) for causing transfer of the toner image from the drum on the paper sheet as the sheet moves progressively in contact with the drum, and means (54) for fixing the transferred toner image onto the paper sheet, characterized in that the effective length l of the line-imager (41) is greater than the length i of a line image to be produced thereby, and that said printer comprises sensor means (88) for sensing the lateral position of a sheet as such sheet approaches towards the drum, and control means (86) for controlling the line-imager (41) in response to the output signal of the sensor means, for altering the longitudinal position of the line images in the line-imager, thereby to compensate for deviation of a sheet from its correct lateral position.

2. An electrophotographic printer according to claim 1, wherein the sensor means (87) for sensing the lateral position of the sheet is located downstream of an arrangement for the correct angular adjustment of the sheet.

3. An electrophotographic printer according to claim 1, wherein the sensor means (87) is arranged to measure the position of one lateral edge of a sheet.

4. An electrophotographic printer according to claim 3, wherein the sensor means comprises a linear CCD device that is mounted at one side of the sheet path in a direction normal to the transport direction of the sheet, and a corresponding radiation source (87) at the opposite side of the sheet path.

5. An electrophotographic printer according to claim 3, wherein the sensor means comprises one light sensor with a light collector, at one side of the sheet path, a linear LED array at the other side of the sheet path in a direction normal to the transport direction of the sheet, and means for sequentially energizing the distinct LED's.

6. An electrophotographic printer according to claim 1, wherein said line imager is a LED array.

7. An electrophotographic printer according to claim 1, wherein said line-imager is a laser-imager.

Fig.1a

Fig.1b

EP 0 300 096 A1

Fig. 2

EP 0 300 096 A1

Fig. 4

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 026 452 (SIEMENS) * Whole document * | 1-7 | H 04 N 1/36 |
| Y | EP-A-0 024 521 (IBM) * Page 9, line 6 - page 11, line 6; page 29, lines 1-27 * | 1-7 | |
| A | EP-A-0 051 460 (FUJI) * Figure 1 * | 5 | |
| A | US-A-4 422 102 (TAMURA) * Column 3, lines 26-54 * | 7 | |

TECHNICAL FIELDS SEARCHED (Int. Cl.4)

H 04 N

The present search report has been drawn up for all claims

| Place of search | Date of completion of the search | Examiner |
|---|---|---|
| THE HAGUE | 20-11-1987 | SCHOENE, K.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)